# EUROPEAN PATENT APPLICATION

(11) **EP 4 567 745 A1**
(43) Date of publication of application: **11.06.2025**
(21) Application number: 23215083.9
(22) Date of filing: 07.12.2023
(51) Int. Cl.: G06V 10/82, G06V 20/69, G06V 20/70, G06T 7/00, G06V 10/426

(54) **SYSTEM AND METHOD FOR REAL-TIME DETECTION OF CANCEROUS CELLS IN A TISSUE**

(71) Applicant: University College Dublin, Dublin 4 (IE)
(72) Inventor: The designation of the inventor has not yet been filed
(74) Representative: Purdylucey Intellectual Property

(57) **Abstract**

Disclosed is a computer-implemented method for real-time detection of cancerous cells in a body tissue that includes capturing one or more images of a microscopic slide sample of the body tissue, pre-processing the captured one or more images, detecting and extracting a plurality of regions of interest in the pre-processed images using a cell detection process, wherein each region of interest includes one or more cells of interest, segmenting each individual cell in the regions of interest and extracting pixel content of each segmented cell, extracting semantic features from each segmented cell image using an embedding extraction model, classifying each individual cell in cancerous or benign class based on corresponding extracted sematic features, and predicting whether the microscopic slide sample classifies in cancerous or benign class, based on one or more positions and relationships among one or more cells classified as cancerous, using a slide level decision model.

## Description

### Field of Invention

The present disclosure relates to detection of cancerous cells in tissue, and more particularly to real-time detection of cancerous cells during tumour excision surgeries as well as biopsy and screening procedures.

### Background

Cancer diagnoses in the US are predicted to rise from 1.8 million annually in 2020 to 2.3 million by 2030 which is a 21% increase. Also, around $200 billion is spent on cancer care each year in the US, with costs rising annually. In the diagnosis and treatment of cancer treatment, biopsies are fundamental to the diagnosis and treatment planning of most cancers, and surgery/excision remains the most effective treatment for localised malignancies. However, a significant portion of these procedures are unsuccessful, leading to delays in diagnosis and treatment, as well as exposing patients to additional risks from repeat procedures. For example, in the diagnosis of lung cancer, as many as 46% of patients are estimated to undergo multiple biopsies prior to diagnosis. In the case of surgery/excision of a tumour, the surgeon performs a complicated balancing act between performing sound oncological surgery by removing the entire cancer while avoiding excessive and unnecessary removal of noncancerous tissue. Up to 30% of breast cancer patients that undergo a lumptecomy are estimated to have Positive Surgical Margins (PSMs), where the cancer was found at the edge of the removed tissue, indicating that cancer was inadvertently left behind in the patient. Patients with PSMs will often undergo repeat surgery to address this issue. Meanwhile, for many other cancers, repeat surgery is not attempted due to increased morbidity. Patients with PSMs will also commonly undergo adjuvant treatments such as chemo and radiation therapy. Despite these additional treatments, studies show that patients with PSMs have higher local recurrence and lower overall survival when a patient undergoes excision of a cancer tumour. A positive margin (incision that doesn't leave a positive margin around cancerous cells) requires an additional surgery to remove the remaining malignant sections.

Tissue assessment is central to cancer diagnosis and management. Usually, tissue assessment is performed post procedurally, with results taking a number of days to a number of weeks. So, if specimens are not representative (i.e., unable to make a diagnosis), or for example, surgical margins are found to be positive (i.e., cancer was found at the surface of the removed tissue), the patient will often have to undergo a repeat procedure or repeat surgery and/or gruelling adjuvant therapies such as chemo and radiation therapy.

The use of optical coherence tomography has been unconvincing in practice, showing reduced efficacy in achieving the primary purpose of detecting positive margins and reducing repeat surgeries compared to early studies. Further, radiological imaging usually requires the presence of a trained radiologist, therefore, it fails to address the issue of needing a trained specialist's presence during surgery. Also, this is not a luxury available to many hospitals and health centres. Radioactive tracers show some promise but require the application of a radioactive medium to patients. Additionally, the probes used to then find the location of the tracers in vivo can lack precision. Fluorescent imaging has been in use in surgical procedures for many years, and it shows promise in certain applications, however, there has been no clear success in margin assessment. This may largely be due to the fact that disease at the margin is often microscopic, which can be very difficult to detect via existing fluorescent media.

Rapid on-site evaluation (ROSE) by a pathologist requires a pathologist to perform preparation and analysis of samples while the procedure is ongoing. This process is disliked by pathologists due to the time constraints involved, requirement to be available at short notice, and the inability to use standard tissue preparation processes. Frozen Section, one of the most common methodologies used in ROSE, has shown lower specificity and sensitivity compared to the postoperative standardised histopathology methodologies. Finally, many care centres simply do not have the on-site pathology resources - either at all or a sufficient pool for the use of ROSE. A global workforce shortage in pathology shows no sign of abating.

Hence, in view of the above, there is a need for a method and system that reduces or even removes the need for a repeat procedure or surgery, thereby removes enormous risk and stress from the patient, and provides reassurance to the doctor, and saves considerable costs for the healthcare system.

### Summary

According to the invention there is provided a system and method for real-time detection of cancerous cells in a body tissue, as set out in the appended claims.

According to an aspect of the present invention, there is provided a computer-implemented method for real-time detection of cancerous cells in a body tissue, that includes capturing one or more images of a microscopic slide sample of the body tissue; pre-processing the captured one or more images; detecting and extracting a plurality of regions of interest in the pre-processed images using a cell detection process, wherein each region of interest includes one or more cells of interest; segmenting each individual cell in the regions of interest and extracting pixel content of each segmented cell; extracting semantic features from each segmented cell image using an embedding extraction model; classifying each individual cell in cancerous or benign class based on corresponding extracted sematic features; and predicting whether the microscopic slide sample classifies in cancerous or benign class, based on one or more positions and relationships among one or more cells classified as cancerous, using a slide level decision model.

In an embodiment of the present invention, there is provided a computer-implemented method that includes capturing the image of the slide by a camera using a grid-based scanning algorithm to generate a stack of images, wherein variable time delays are applied among consecutive positions of the camera across the slide to reduce motion blur in the stack of images.

In an embodiment of the present invention, the pre-processing the captured image comprises running a deblurring process on the captured image, wherein the deblurring process includes first running a gaussian blurring function on the captured image to generate a gaussian processed image, and then subtracting the gaussian processed image from the captured image to generate a deblurred image.

In an embodiment of the present invention, the cell detection process includes analysing each sub-image through a combination of visual recognition network and a bounding box regression method, to deduce whether the sub-image qualifies as a region of interest.

In an embodiment of the present invention, the segmenting each cell in the region of interest includes annotating segmentation mask around each individual cell in the region of interest, and eliminating background noise in the region of interest.

In an embodiment of the present invention, the embedding extraction model is implemented through a deep neural network that is trained to automatically extract feature embeddings from the cellular region that describe the visual content of the cell, wherein the embedding extraction process is trained based on a plurality of positive pairs of training images, wherein in the positive pair, both images belong to same class, and a plurality of training images are generated by algorithmically transforming training images into new training images with modified visual characteristics.

In an embodiment of the present invention, wherein during training, the trained embedding extraction model receives a pair of images as an input and generate a pair of image embeddings as an output, wherein the pair of image embeddings from similar class of cells are close in vector space, and the pair of image embeddings from different classes are far apart in vector space.

In an embodiment of the present invention, the method further includes classifying each individual cell in cancerous or benign class, includes generating a cell class prediction score for each cell by a decision network, based on a combination of outputs of a vision classification model, a vision transformer and corresponding extracted semantic features.

In an embodiment of the present invention, the method, the determining whether the microscopic slide sample is cancerous or benign comprises generating a graph structure based on the microscopic slide sample, in that each predicted cancerous cell becomes a node, generating a feature vector based on the graph structure, wherein the feature vector is representative of shape and architectural layout of the predicted cancerous cells within the slide sample based on distances and angles between each node and corresponding neighbours, and inputting the feature vector into the slide level decision model to receive a prediction whether the microscopic slide sample is in cancerous or benign class.

In an embodiment of the present invention, the slide level decision is based on a machine learning model that is trained to predict a class of the microscopic slide sample based on feature vectors of cancerous and benign slide samples.

In an embodiment of the present invention, the method includes generating a digital report outlining the occurrence/non-occurrence of cancerous tissue in the slide sample.

Various embodiments of the present invention provide a detection device that is capable of matching trained clinician levels of accuracy based on advanced AI to help surgeons to determine the optimal margins in real-time during a surgery and assist clinicians to determine the success of a biopsy procedure in real-time. During procedures, clinicians and surgeons can receive detailed reports outlining the presence/non presence of cancerous tissue on tissue samples removed. The detection device replicates the current process, where a trained expert carries out a tissue assessment, and outputs its findings to the clinician or surgeon to aid their decision-making into whether the margin excision is optimal or a biopsy has been successful.

The detection device uses cutting edge AI technology to perform the intraprocedural tissue analysis without the need for a pathologist's presence. The detection device can analyse entire samples more efficiently to ensure that no delays are incurred, and no potentially cancerous tissue is missed during analysis.

The detection device facilitates rapidly identifying the presence of cancerous and non-cancerous cells and tissue during medical procedures, post procedurally, or as a screening tool. Furthermore, rapid tissue assessment may also provide enormous benefit in screening and diagnostics.

The detection device offers multiple advantages for the patients, as they get added reassurance of successful surgery or procedure, reduced need for repeat procedures, and better cosmetic and functional outcomes. For payers, the detection device provides time-efficient tissue analysis without need for additional pathologists on staff, resulting in reduced readmissions and repeat procedure costs, and greater patient satisfaction rates. For pathologists, the detection device reduces the requirement of time-intensive intraoperative margin assessment via Frozen Section or Imprint Cytology. For clinicians and surgeons, the detection device provides increased reassurance during the procedure, immediate availability, ease of application and use based on existing modalities.

### Brief description of the drawings

The invention will be more clearly understood from the following description of an embodiment thereof, given by way of example only, with reference to the accompanying drawings, in which: -
FIG. 1 is a flowchart illustrating a method for detecting cancerous cells in a body tissue in real-time, in accordance with an embodiment of the present invention;
FIG.2A illustrates using a grid-based scanning algorithm for imaging a microscope slide sample, in accordance with an embodiment of the present invention;
FIG.2B illustrates an example of the decreasing and increasing time delays being applied to stepper motor calls of the camera used for grid-based scanning, to optimally reduce motion blur in camera images due to the shake on the camera unit from stepper motor movement, in accordance with an embodiment of the present invention;
FIG.2C illustrates a stack of images at the end of the scanning process, each one containing the region within a grid square, in accordance with an embodiment of the present invention;
FIG.3 illustrates regions of interests containing clusters of individual cells, and cell segmentation masks for extracting pixels of individuals cells, in accordance with an embodiment of the present invention;
FIG.4 illustrates the use of three classification models to generate a cell class prediction score for each class for each cell, in accordance with an embodiment of the present invention;
FIGs.5A-5C illustrate examples of normal non-cancerous cells, abnormal carcinogenic cells, and abnormal non-carcinogenic cells, in accordance with an embodiment of the present invention;
FIG.6 illustrates a slide sample which includes few cells predicted as cancerous, in accordance with an embodiment of the present invention;
FIG.7A illustrates an example graph structure created from predicted cancerous cells of a slide sample, in accordance with an embodiment of the present invention;
FIG.7B illustrates converting each graph into a feature vector for use in an ML model, in accordance with an embodiment of the present invention; and
FIG.7C illustrates training machine learning model based on the outputted feature vectors in the slide examples, in accordance with an embodiment of the present invention.

### Detailed description of drawings

The invention is not limited to the embodiments hereinbefore described but may be varied in both construction and detail.

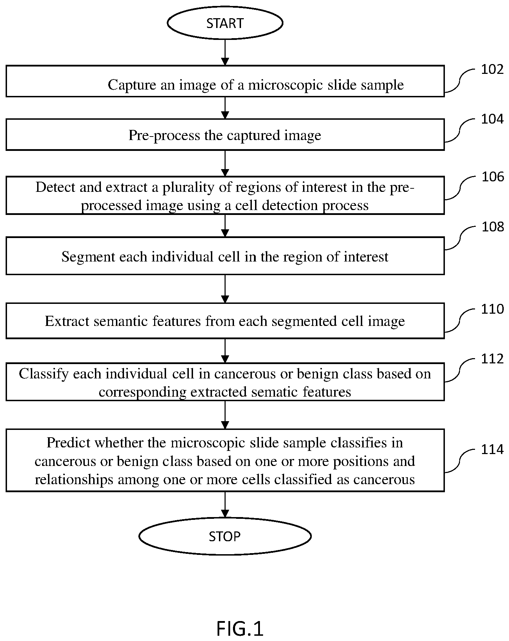

FIG. 1 is a flowchart illustrating a method for detecting cancerous cells in a body tissue in real-time, in accordance with an embodiment of the present invention.

At step 102, various images of a microscopic slide sample of the body tissue are captured in real-time during a procedure. The procedure may include a surgery, a biopsy or a screening procedure. In an embodiment of the present invention, a detection device may be used that includes an integrated camera to capture the images during the procedure, and a processor for processing the captured images to detect the cancerous cells in real-time, and provide real-time feedback to clinicians and surgeons during procedures.

Once tissue has been removed from the patient, the removed tissue may be taken aside for further investigation (typically a maximum of 6 samples in the case of surgical margins). The samples may be collected from the tissue, and transferred onto microscope slides. This can be performed by various methods currently used in medical practice. The collected samples may then be prepared by either an airdrying process, or chemical fixation - for example the application of a fixative, which aids in the preservation of cellular structures. The application of various stains may be used to enhance visualisation of cellular features. The collected sample slides may be then placed into the detection device, either directly or by being placed onto a slide tray that is then placed into the detection device. The detection device then proceeds to capture images and media of the samples at magnification. In addition to brightfield, other imaging modalities may also be applied during the imaging process such as phase contrast or fluorescent imaging. The images may be then processed by a software running on the processor.

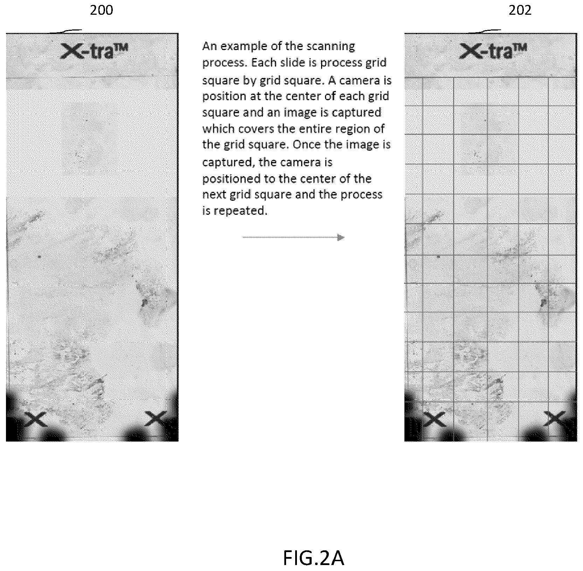

FIG.2A illustrates using a grid-based scanning algorithm for imaging a microscope slide 200, in accordance with an embodiment of the present invention. In an embodiment of the present invention, the images may be captured using a grid-based scanning algorithm that breaks the slide sample down into several subregions 202 in a grid like pattern. A camera may then be moved across the slide using stepper motor drivers and an image at the center of each grid position is taken. Once the image is captured, the camera is positioned to the center of the next grid square and the process is repeated.

Each sub-region may be processed row by row and when the camera position reaches the end of a row, the column position may be incremented and the direction of the movement may be reversed. This process may be repeated until the entire microscope slide 200 has been scanned.

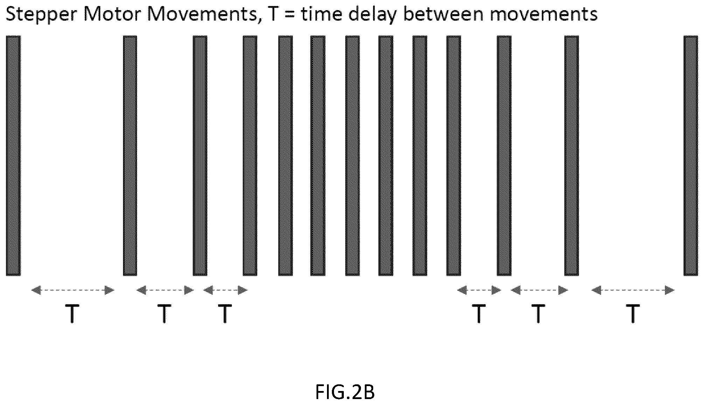

FIG.2B illustrates an example of the decreasing and increasing time delays being applied to stepper motor calls of the camera used for grid-based scanning, to optimally reduce motion blur in camera images due to the shake on the camera unit from stepper motor movement, in accordance with an embodiment of the present invention. Usually, the biggest issue that is encountered with scanning at such high magnifications is motion blur due to the movement of the stepper motors. Therefore, a custom algorithm has been developed to account for this motion blur and to reduce it as much as possible. In a typical camera movement, there may be hundreds of steps required depending on the scale of magnification. As part of the custom algorithm, an uneven spread of stepper motor movements is applied over time so that the motion blur is reduced by the time, the camera is positioned for the next picture to be taken. The time delays may be applied at the start of the movement that reduce over time until the motor steps are being called at the fastest possible up until a point where the camera is close to position for the next image. Then, time delays may be added between steps which increase in value as the camera position gets closer to its position for an image to be captured. By staggering the times between the stepper motor movements, the camera shake may be reduced gradually and thus requiring less delay before capture time.

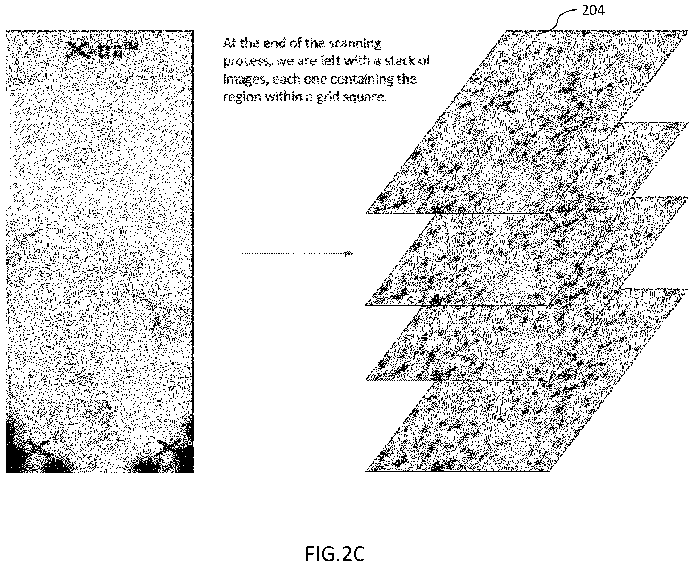

FIG.2C illustrates a stack of images 204 at the end of the scanning process, each one containing the region within a grid square, in accordance with an embodiment of the present invention. Thus, the entire content of the slide can be captured in a stack of sub-images and then the entire slide image can be recreated by joining these sub-images back together.

Referring back to FIG.1, at step 104, several pre-processing steps may be applied to each sub-image to clean an image, denoise it, improve the contrast before processing and accentuate certain parts within relevant pixel ranges within the image. Due to the microscopic nature of the matter that is being scanned, there is likely to be image degradation issues and or microscopic dirt due to issues like motion blur and environmental conditions. The preprocessing includes running a deblurring algorithm as a first pass over the scanned slide images. This deblurring algorithm has two phases. The first phase generates a new image which is the output of the original image with a gaussian blurring function running on top of the image with the high Sigma value. The gaussian processed image is then subtracted from the original image which acts as a deblurring mechanism. A histogram equalisation method may also be employed, which tries to better balance the distribution of colour in each image.

In addition, a lightweight fully connected convolutional neural network that has been optimized to generate a deblurred image is then processed over this outputted gaussian processed image. This lightweight convolutional neural network has been trained using a synthetically generated data set. This data set has been created by algorithmically applying motion blur to two sets of training images, and then training the network using the algorithmically processed blurred images as inputs into the network and the original images as outputs into the network. This process can help learn a model that can ingest an image with some motion blur and output a new generated image with minimal blur. In an example, the samples/images may be processed through a rapid pre-processing step to convert them to a format that can be effectively analysed by the processor. The samples/images may be processed in a three dimensional matrix of floating point values which represent the pixel intensities in each of the R,G and B dimensions.

Referring back to FIG.1, at step 106, a plurality of regions of interest in the pre-processed image are detected and extracted using a cell detection process. Each region of interest may include one or more cells of interest, i.e. cells of cancerous nature. The cell detection algorithm includes vision based deep learning algorithms to determine the presence of certain cellular groupings within a slide scan. The cell detection algorithm is based on a visual recognition network architecture called a single pass detection network which means that classification of the cell classes and regression estimation of the bounding box coordinates is done in a single pass over the image.

The individual cells are cells or clusters of cells of interest that are to be analysed further. To detect and extract individual cells, each scan of a slide image may be broken down into thousands of individual images representing a small region within the full slide. The next step is to process these grid images to identify regions within them likely to contain cells of interest. A cell of interest is a subset of cells that have a higher probability of being cancerous. The objective of the cell detection algorithm is to ingest an image and try to classify the sub regions within that image that contain the objects that the model is trained to recognize.

As part of the training process of the cell detection algorithm, a large set of sample slides may be collected and broken down into grid-based sub images. The output of this process results in thousands of sub-images that can then be used for annotation purposes to train the cell detection algorithm. It is to be noted that, several pathology experts may be brought in to manually analyze each of these sub images using an image analysis tool. In an example, the cell detection algorithm may implement a combination of custom single shot visual recognition network and bounding box regression algorithm on cytology scans. The samples that the device images and analyses are largely cytology samples - which focuses on individual cells and their structure etc., as opposed to the more commonly used histology, which focuses on the microscopic anatomy of tissues and their structures.

At step 108, each individual cell in the region of interest is segmented and the pixel content of each segmented cell is extracted for further analysis. In an embodiment of the present invention, a fully connected visual recognition network that has been developed and optimized for cytology cell segmentation is applied to segment each individual cell and eliminate background noise at the cellular level. The noise can introduce issues with classification accuracy and removing it can help keep model accuracy optimal.

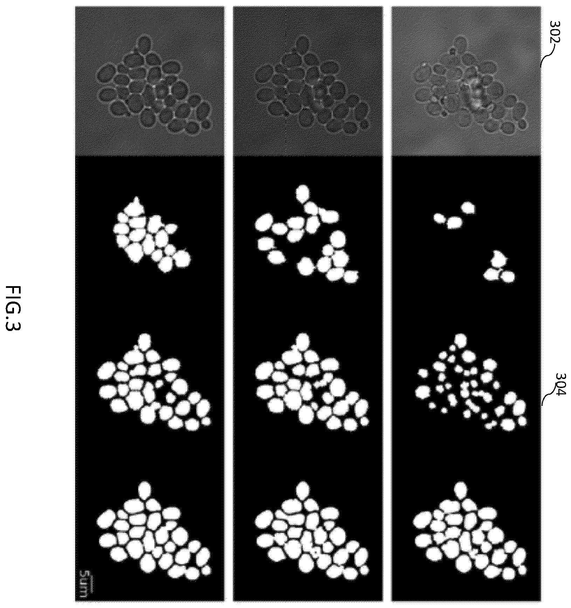

In an embodiment of the present invention, there may be two approaches adopted for this task, the first approach is a simple extraction of the region within the bounding box coordinates associated with that cell as predicted by the cell detection algorithm, and the second approach is an optimized algorithm using an extension to the cell localization algorithm, which is trained to output cell segmentation masks as opposed to bounding box coordinates. As input into this model, segmentation masks are annotated around each cell of interest and the model can be trained to predict an output segmentation mask for similar classes of cell objects. One segmentation mask is created per cell per cell region. Once a segmentation mask is predicted, all pixels within the mask region that represents a single cell in the mask image are extracted. FIG.3 illustrates regions of interests 302 containing clusters of individual cells, and cell segmentation masks 304 for extracting pixels of individuals cells.

Referring back to FIG.1, at step 110, semantic features are extracted from each segmented cell image using an embedding extraction model. The embedding extraction model is a deep neural network which may be trained and optimized to automatically extract feature embeddings from the cellular region that describe the visual content off the cell. In order to train models to extract optimal features with high levels of discrimination between cellular types, an embedding extraction model may be trained in a semi-supervised manner. One of the challenges as part of the training process is that it is very expensive and difficult to obtain highly scalable data sets of human cellular imagery. Embedding models, in general, requires very large-scale data sets to learn optimal embeddings for image comparison. To address the difficulties in obtaining this data, a novel training approach has been developed that can be adopted and optimized using much smaller datasets of cellular imagery.

In an embodiment of the present invention, an algorithm has been adopted to train the embedding extraction model by inputting positive pairs of images. It is to be noted that both input images in the pair are from either a positive cancerous class or from a benign class, i.e. in each positive pair, both images come from the same class. Each negative pair is a class of cell which is paired with a random cell from the other class, i.e. if the seed cell class is cancerous then the paired image is randomly chosen from images in the benign class. In order to train this model at scale, an unsupervised approach may be used to generate these image pairs where we generate more examples of training images by algorithmically transforming images from the training set into new images with modified visual characteristics.

In an example, various well known image transformations may be applied to the original input image such as rotation transformations, affine transformations, cropping, colour amendment transformations among others. This can help train a more accurate embedding model as the potential number of input images is very large in comparison to the size of the training set. This is necessary when in this domain, as there is great difficulty and cost involved in collecting medically annotated images from real patient samples. A positive pair of images from a class might consist of the original cellular images alongside it's generated image, for example.

The neural network may then be trained based on multiple convolutional layers and by inputting the images in pairs, to learn internal weight representations, whereby the final model output will generate a feature vector. Each input consists of a pair of images and each output consists of a pair of image embeddings. The idea behind this training process is that the internal weights may be learned to generate outputs, where the outputs generated for a pair of images are more similar when the input images are from the same class and dissimilar when the input pair of images are from different classes. These feature vectors are highly distinctive and represent the visual characteristics of a cell and can capture the visual differences between cell classes. Embeddings from one class of cells will be close in vector space and embeddings from different classes will be far apart in vector space. These embeddings can then be used as inputs into downstream ML models.

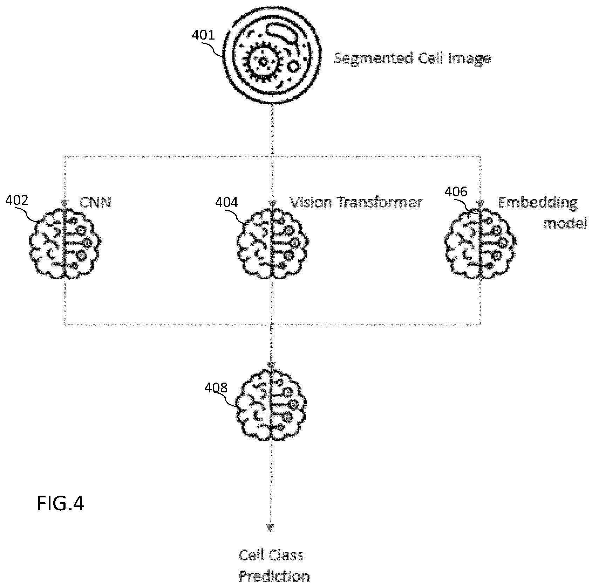

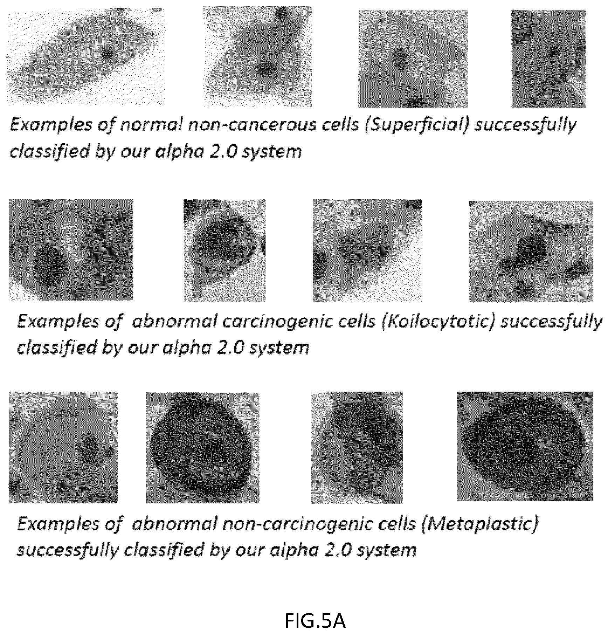

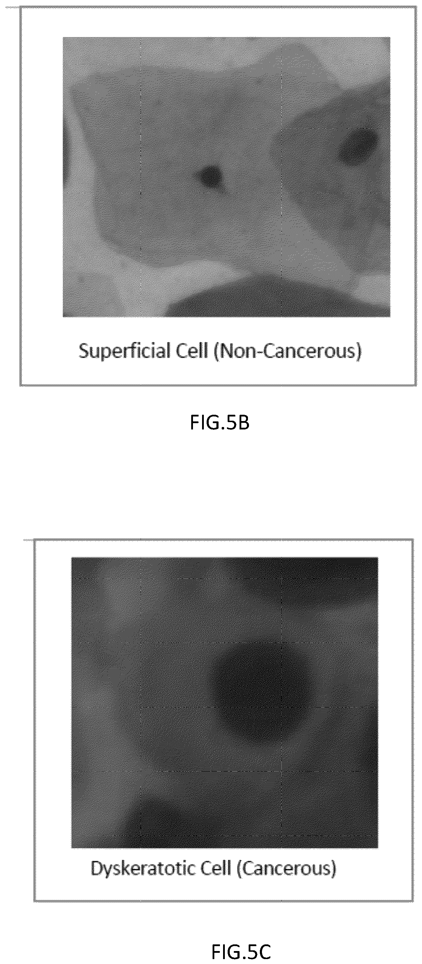

At step 112, each individual cell image which has been detected and extracted using the previous steps is classified as cancerous or benign using a cell classification algorithm. It is to be noted that thousands of both cancerous and benign samples across varying classes within these two categories are analysed, and several pathology experts have manually reviewed and annotated these samples into their respective classes. In an embodiment of the present invention, three separate image classification algorithms may be trained which may be used in tandem in an ensemble format to make a decision about each individual cell of interest. The use of three classification models to generate a cell class prediction score is illustrated in FIG.4. The first model 402 is a vision classification model based on a well-known computer vision architecture called a convolutional neural network. The second model 404 is based on a type of neural network architecture commonly referred to as a vision transformer. The third model 406 uses the embeddings that have been learned by the embedding extraction model at step 108, as inputs into a neural network with simple linear layers used as classification layers. These, three models may then process every cell extracted from the image and generate a score as to whether the cell is cancerous or benign. The outputs of each individual classifier is combined by a final classifier 408 which makes the final decision as to the class of the cell. This architecture is more robust than a typical ensemble decision approach such as a majority vote. The output of the final classifier 408 generates a classification and prediction probability for every cell within a slide. FIGs.5A-5C illustrate examples of normal non-cancerous cells, abnormal carcinogenic cells, and abnormal non-carcinogenic cells classified using the final classifier 408. Thus, each cell is classified into one or more medical categories based on visual cellular degradation. These provide the ability to analyse cytology imagery and determine a decision as to the cancerous nature of a slide image.

Referring back to FIG.1, at step 114, it is predicted whether the microscopic slide sample classifies in cancerous or benign class based on positions and relationships between the cells classified as cancerous on the slide sample, using a slide level decision algorithm/model.

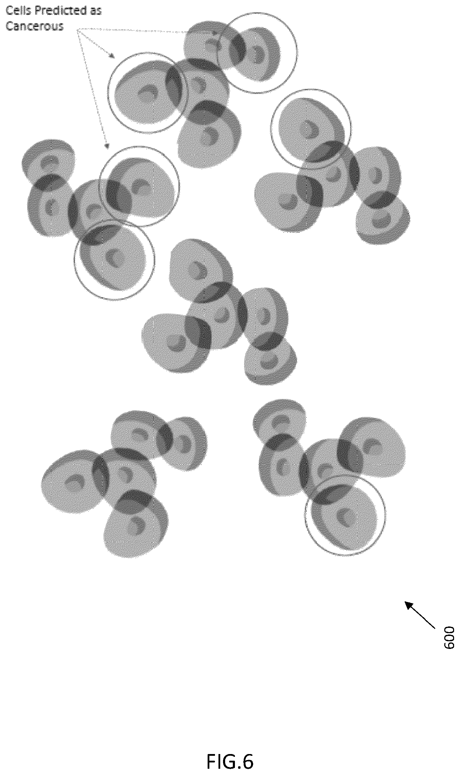

An example of a slide sample 600 is illustrated with reference to FIG.6 in that few cells are predicted as cancerous. One of the key metrics to consider when analysing cancerous cell classifications from the vision-based algorithms is the layout, positions, and distances of positive classifications. Cancerous cells tend to group in regions within the tissue and even though permanent cell architecture is usually lost through the process of cytological sample collection & preparation, some minor architectural information is retained within the samples. What this means is that cancerous cells are more likely to appear in clustered groups throughout a sample. In theory, a single cancerous cell is enough for a slide to be given a cancer positive diagnosis however in practice understanding, the error rates of the cell classification algorithms, this is not a feasible approach to apply.

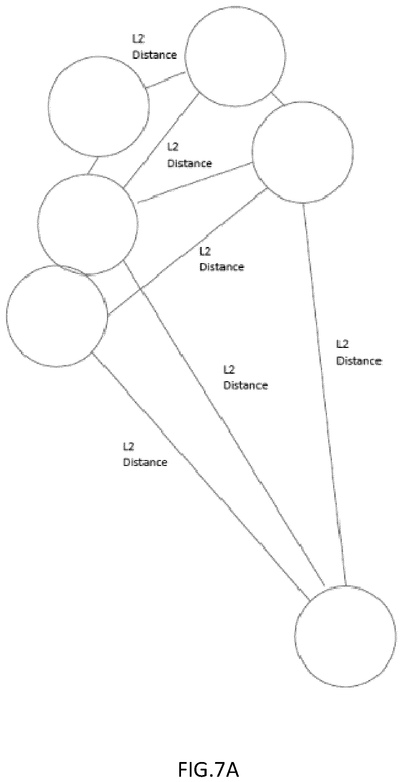

FIG.7A illustrates an example graph structure 700 created from predicted cancerous cells of a slide sample (for example, the slide sample 600). Each cancerous cell becomes a node within the graph structure 700. The distances between each node and its neighbours may be calculated using the Euclidean distance metric between their X,Y centre coordinates. These cells/nodes are then joined as edges and each edge is assigned the L2 distance as a value. Thus, the graph structure 700 captures the shape and architectural layout of the detected or presumed cancerous cells within the slide sample. This graph structure 700 may be then used as a global representation of an entire slide.

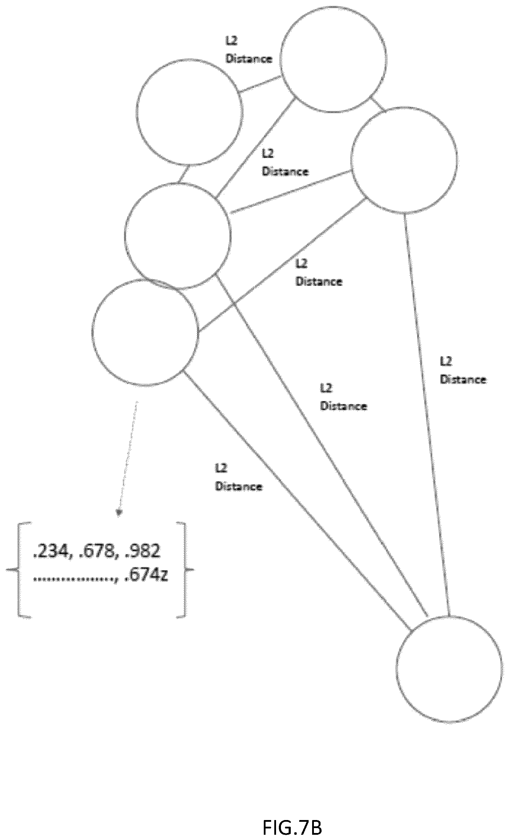

FIG.7B illustrates converting each graph into a feature vector for use in an ML model. The features may describe the structure of the graph and each nodes relationships to its neighbours, and may be calculated based on mean distances to nodes based on the rank of the node distances for each node. In an example, the features may be calculated based on the mean distances between ith ranked closest neighbours and by measuring the angle between the neighbours.

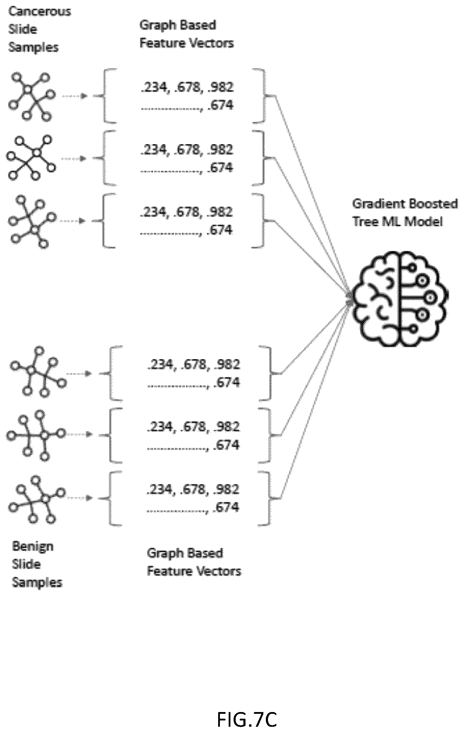

FIG.7C illustrates training machine learning model based on the outputted feature vectors in the slide examples. A process may be applied to learn the structure of the graphs and what structure patterns indicate cancerous samples and which structures indicate benign samples. Feature vectors extracted from cancerous slides are used a positive examples and feature vectors extracted from benign slides are used as negative examples. The model can learn the patterns that indicate cancerous vs benign architecture within the slide sample. In an example, a gradient boosted tree model is illustrated herein, but alternative ML models may also be used. Thus, at inference time, a graph structure is generated for each slide scan, and a feature vector is extracted to represent the structure of the graph and the feature vector is provided as an input into the trained model. The model outputs a confidence value as to which class the inputted graph structure is likely to belong to.

A digital report may be generated for the clinician or surgeon on-device outlining the occurrence/non-occurrence of cancerous tissue in the provided tissue samples. Based on the feedback from the detection device, the clinician or surgeon may then decide to collect or remove further tissue in the region of an inadequate biopsy or a detected positive margin for example, thus ensuring that an adequate biopsy sample has been obtained or that all cancerous tissue is removed and eliminating the need for a follow-on surgery. It is estimated that this entire process from start to finish takes between 5-10 mins depending on the cancer type. Thus, the detection devices provide an end-to-end recognition solution optimized for the classification of cytology scans at a cellular level.

In an embodiment of the present invention, the development and evaluation efforts of the detection device have been focussed to date with cervical samples procured through clinical contacts, due to the lack of available public data for breast, lung and skin cancers. Although there could be differences between different cancer types at a cellular level, the cervical sample dataset is representative of the type of data that is expected to encounter for breast, lung and skin cancers. The focus of the cervical dataset is to identify changes at a cellular level indicative of pre-cancerous cellular change. These cellular features could also be used to distinguish between benign or malignant disease. Successful results using this data provide a good indicator of likely success on visually similar data in other domains. In addition, successful evaluation on cervical samples also opens the potential for another complementary market in providing diagnostics tools to aid and speed up cervical checks.

In an example, the cervical cytology dataset that is developed and evaluated contains the 5 core classes of cellular types relevant in the cervical domain. The 5 core classes include superficial cells (normal, non-cancerous), parabasal cells (normal, non-cancerous), metaplastic cells (abnormal growth, non-cancerous), dyskeratotic cells (Abnormal growth, cancerous), and koilocytotic cells (Abnormal growth, cancerous). This dataset has been hand annotated by a team of qualified pathologists and consists of over 2,500 hand-annotated samples. Each sample has been annotated multiple times by multiple people. These are then split into train/validation sets with a ratio of 80:20. Based on the literature and region, the figures may vary to an extent to expected current levels of accuracy for this task from as low as 80% up to as high as 95%.

The invention holds a wealth of other possible applications, especially within surgical and interventional oncology, as well as cancer diagnostics & screening. Applications currently under investigation and development are, but not limited to, intraoperative margin assessment for breast cancer resection, lung cancer biopsy analysis, cervical cancer screening, veterinary cancer screening and diagnosis, and intraoperative margin analysis for skin cancer resections. Other applications could include microbiology, haematology, and general pathology applications.In the specification, the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

## Claims

1. A computer-implemented method for real-time detection of cancerous cells in a body tissue, comprising:
capturing one or more images of a microscopic slide sample of the body tissue;
pre-processing the captured one or more images;
detecting and extracting a plurality of regions of interest in the pre-processed images using a cell detection process, wherein each region of interest includes one or more cells of interest;
segmenting each individual cell in the regions of interest and extracting pixel content of each segmented cell;
extracting semantic features from each segmented cell image using an embedding extraction model;
classifying each individual cell in cancerous or benign class based on corresponding extracted sematic features; and
predicting whether the microscopic slide sample classifies in cancerous or benign class, based on one or more positions and relationships among one or more cells classified as cancerous, using a slide level decision model.

2. The computer-implemented method as claimed in claim 1 further comprising capturing the image of the slide by a camera using a grid-based scanning algorithm to generate a stack of images, wherein variable time delays are applied among consecutive positions of the camera across the slide to reduce motion blur in the stack of images.

3. The computer-implemented method as claimed in claim 1 or 2, wherein the pre-processing the captured image comprises running a deblurring process on the captured image, wherein the deblurring process includes first running a gaussian blurring function on the captured image to generate a gaussian processed image, and then subtracting the gaussian processed image from the captured image to generate a deblurred image.

4. The computer-implemented method as claimed in any preceding claim, wherein the cell detection process includes analysing each sub-image through a combination of visual recognition network and a bounding box regression method, to deduce whether the sub-image qualifies as a region of interest.

5. The computer-implemented method as claimed in any preceding claim, wherein segmenting each cell in the region of interest includes annotating segmentation mask around each individual cell in the region of interest, and eliminating background noise in the region of interest.

6. The computer-implemented method as claimed in any preceding claim, wherein the embedding extraction model is implemented through a deep neural network that is trained to automatically extract feature embeddings from the cellular region that describe the visual content of the cell, wherein the embedding extraction process is trained based on a plurality of positive pairs of training images, wherein in the positive pair, both images belong to same class, and a plurality of training images are generated by algorithmically transforming training images into new training images with modified visual characteristics.

7. The computer-implemented method as claimed in claim 6, wherein during training, the trained embedding extraction model receives a pair of images as an input and generate a pair of image embeddings as an output, wherein the pair of image embeddings from similar class of cells are close in vector space, and the pair of image embeddings from different classes are far apart in vector space.

8. The computer-implemented method as claimed in any preceding claim further comprising classifying each individual cell in cancerous or benign class, includes generating a cell class prediction score for each cell by a decision network, based on a combination of outputs of a vision classification model, a vision transformer and corresponding extracted semantic features.

9. The computer-implemented method as claimed in any preceding claim, wherein the determining whether the microscopic slide sample is cancerous or benign comprises:
generating a graph structure based on the microscopic slide sample, in that each predicted cancerous cell becomes a node;
generating a feature vector based on the graph structure, wherein the feature vector is representative of shape and architectural layout of the predicted cancerous cells within the slide sample based on distances and angles between each node and corresponding neighbours; and
inputting the feature vector into the slide level decision model to receive a prediction whether the microscopic slide sample is in cancerous or benign class.

10. The computer-implemented method as claimed in claim 9, wherein the slide level decision is based on a machine learning model that is trained to predict a class of the microscopic slide sample based on feature vectors of cancerous and benign slide samples.

11. The computer-implemented method as claimed in any preceding claim further comprising generating a digital report outlining the occurrence/non-occurrence of cancerous tissue in the slide sample.
